# EUROPÄISCHE PATENTSCHRIFT

(11) **EP 3 861 046 B1**
(45) Veröffentlichungstag und Bekanntmachung des Hinweises auf die Patenterteilung: **29.06.2022**
(21) Anmeldenummer: 19773878.4
(22) Anmeldetag: 30.09.2019
(51) Int. Cl.: C08G 59/50, C08G 59/68, C09D 163/00

(54) **BESCHLEUNIGER FÜR DIE AUSHÄRTUNG VON EPOXIDHARZEN MIT ALKYLIERTEN AMINEN**
ACCELERATOR FOR THE HARDENING OF EPOXIDE RESINS WHICH CONTAIN ALKYL GROUPS
ACCÉLÉRATEUR DE DURCISSEMENT POUR UNE COMPOSITION DE RÉSINE ÉPOXIDE AVEC DES RESTES ALKYLE

(30) Priorität: 01.10.2018 EP 18197977
(43) Veröffentlichungstag der Anmeldung: 11.08.2021
(73) Patentinhaber: Sika Technology AG, 6340 Baar (CH)
(72) Erfinder: KASEMI, Edis, 8046 Zürich (CH); KRAMER, Andreas, 8008 Zürich (CH); STADELMANN, Ursula, 8046 Zürich (CH); BURCKHARDT, Urs, 8049 Zürich (CH)
(74) Vertreter: Sika Patent Attorneys
(86) Internationale Anmeldenummer: PCT/EP2019/076491
(87) Internationale Veröffentlichungsnummer: WO 2020/070082

(56) Entgegenhaltungen:
- EP-A1- 0 697 426
- EP-A1- 1 319 677
- DE-A1- 2 853 752
- US-A- 4 397 998

## Beschreibung

### Technisches Gebiet

Die Erfindung betrifft das Gebiet der Beschleuniger für Epoxidharz-Zusammensetzungen und ihre Verwendung, insbesondere als Beschichtung.

### Stand der Technik

Beschichtungen auf Epoxidharz-Basis sind im Bauwesen weit verbreitet. Sie bestehen aus flüssigen Harz- und Härterkomponenten, welche vor der Applikation gemischt werden und dann bei Umgebungstemperaturen im Bereich von etwa 5 bis 35 °C zu einem hochfesten und beständigen Material aushärten. Solche Epoxidharz-Beschichtungen haben eine Neigung zu Oberflächenstörungen wie Trübungen, Flecken, Rauheit oder Klebrigkeit, was auch als "Blushing" bezeichnet wird. Blushing wird durch die Salzbildung der in der Härterkomponente enthaltenen Amine mit Kohlendioxid (CO₂) aus der Luft verursacht und tritt besonders bei hoher Luftfeuchtigkeit und tiefen Temperaturen auf. Insbesondere in ästhetisch anspruchsvollen Beschichtungsanwendungen wie Bodenbelägen ist das Auftreten von Blushing-bedingten Oberflächenstörungen äusserst unvorteilhaft und erfordert meist ein aufwendiges Nachbearbeiten bzw. Überbeschichten der schadhaften Stellen oder häufig sogar der ganzen Beschichtung.

Mittels Verdünnern wird die Viskosität einer Epoxidharz-Zusammensetzung gesenkt, damit sie einfach applizierbar ist und die Substratoberflächen gut benetzt. Gleichzeitig vermindern Verdünner auch die Anfälligkeit auf Blushing. Die üblichen Verdünner, wie beispielsweise Benzylalkohol, sind flüchtige Verbindungen (VOC oder SVOC), welche bei der Aushärtung nicht in die Polymermatrix eingebaut werden und somit zu Emissionen führen können. Für emissionsarme Produkte, wie sie von Verbrauchern zunehmend nachgefragt werden, können Verdünner deshalb nur in geringer Menge oder gar nicht verwendet werden.

Zur Verminderung von Blushing und als Reaktivverdünner können in der Härterkomponente alkylierte Amine eingesetzt werden, wie in EP 2,151,461, EP 2,943,464, WO 2016/023839, EP 3,138,863 oder EP 3,144,335 beschrieben.

Alkylierte Amine führen aber zu einer verlangsamten Aushärtung. Zur Beschleunigung können die für kalthärtende Epoxidharz-Zusammensetzungen bekannten Beschleuniger wie 2,4,6-Tris(dimethylaminomethyl)phenol oder Säuren wie Salicylsäure eingesetzt werden. Damit ist die Aushärtegeschwindigkeit aber vor allem bei kalten Temperaturen innerhalb der ersten 24 Stunden immer noch unbefriedigend.

In EP 0,471,988, EP 0,697,426 und EP 1,319,677 wird Calciumnitrat als Beschleuniger für die Aushärtung von Epoxidharzen mit Aminen beschrieben. Dabei kommen aber weder kalte Temperaturen noch alkylierte Amine zum Einsatz.

### Darstellung der Erfindung

Aufgabe der vorliegenden Erfindung ist es, emissionsarme Epoxidharz-Beschichtungen mit guter Verarbeitbarkeit zur Verfügung zu stellen, die auch bei feuchtkalten Bedingungen schnell und ohne Blushing-bedingte Oberflächenstörungen aushärten und dabei mechanisch hochwertige Beschichtungen mit geringer Vergilbungsneigung ergeben.

Diese Aufgabe wird mit der Zusammensetzung enthaltend Calciumnitrat, mindestens ein Epoxidharz und mindestens ein Amin der Formel (I), wie in Anspruch 1 beschrieben, gelöst. Die Verwendung von Calciumnitrat als Beschleuniger für alkylierte Amine wie N-Benzyl-1,2-ethandiamin ist bisher nicht beschrieben. Überraschenderweise ermöglicht Calciumnitrat eine besonders schnelle Aushärtung bei feuchtkalten Bedingungen innerhalb der ersten 24 Stunden, was für Amine der Formel (I) mit alkylierten Aminogruppen besonders anspruchsvoll ist. Eine Beschichtung ist dadurch schon nach kurzer Zeit, typischerweise innerhalb der ersten 24 Stunden nach der Applikation, begehbar und kann weiter bearbeitet werden, beispielsweise überbeschichtet oder versiegelt werden. Zudem entstehen auch bei feuchtkalten Bedingungen ästhetisch schöne Oberflächen mit hohem Glanz.

Die beschriebene Zusammensetzung ermöglicht emissionsarme Epoxidharz-Produkte mit guter Verarbeitbarkeit und langer Topfzeit, welche schnell aushärten und bald begehbar sind, insbesondere auch bei feuchtkalten Bedingungen, und dabei mechanisch hochwertige Materialien mit hoher Oberflächenqualität und geringer Neigung zum Vergilben ergeben. Solche Epoxidharz-Produkte sind besonders geeignet als Beschichtungen, insbesondere für Böden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung enthaltend Calciumnitrat, mindestens ein Epoxidharz und mindestens ein Amin der Formel (I),

(H₂N)ₘ-A-(NH-Y)ₙ (I)

wobei
m für 0 oder 1, n für 1 oder 2 und (m+n) für 2 stehen,
A für einen gegebenenfalls Stickstoffatome oder cyclische oder aromatische Anteile enthaltenden Alkylenrest mit 2 bis 10 C-Atomen steht, und
Y für einen Alkyl-, Cycloalkyl- oder Aralkylrest mit 1 bis 20 C-Atomen steht.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Topfzeit" wird die Verarbeitbarkeitsdauer einer Epoxidharz-Zusammensetzung bezeichnet, d.h. die maximal mögliche Zeitspanne zwischen dem Mischen der Komponenten und der Applikation der vermischten Zusammensetzung, in der diese in einem ausreichend fliessfähigen Zustand ist und die Substratoberflächen benetzen kann.

Als "Offenzeit" eines Klebstoffs wird die für eine kraftschlüssige Verbindung maximal mögliche Zeitspanne zwischen der Applikation des Klebstoffs und dem Fügen der zu verklebenden Teile bezeichnet.

Als "Raumtemperatur" wird eine Temperatur von 23 °C bezeichnet.

Calciumnitrat Ca(NO₃)₂ kann in der Zusammensetzung in wasserfreier Form oder als Tetrahydrat vorhanden sein bzw. eingesetzt werden. Calciumnitrat wird auch als Calciumsalz der Salpetersäure oder als Kalksalpeter bezeichnet. Es wirkt in der Zusammensetzung als Beschleuniger bei der Aushärtung des Epoxidharzes mit dem Amin der Formel (I).

Bevorzugt wird Calciumnitrat eingesetzt in Form einer bei Raumtemperatur flüssigen Lösung.

Insbesondere wird Calciumnitrat eingesetzt als Lösung in Wasser oder einem Alkohol. Geeignete Alkohole sind insbesondere Methanol, Ethanol, die isomerem Propanole oder Butanole, Benzylalkohol, 2-Phenoxyethanol, 2-Benzyloxyethanol, Ethylenglykol, Diethylenglykol, Diethylenglykolmonomethylether, Diethylenglykolmonoethylether, Propylenglykol, Propylenglykolmonomethylether, Propylenglykolmonolbutylether, Propylenglykolmonophenylether, Dipropylenglykol, Dipropylenglykolmonomethylether.

Besonders bevorzugt wird Calciumnitrat eingesetzt als Lösung in Wasser oder Ethanol.

Am meisten bevorzugt ist Calciumnitrat als wässrige Lösung vorhanden bzw. wird als wässrige Lösung eingesetzt.

Bevorzugt weist die Lösung von Calciumnitrat eine Konzentration im Bereich von 10 bis 80 Gewichts-% auf, je nach Löslichkeit im verwendeten Lösemittel.

Eine wässrige Lösung von Calciumnitrat weist bevorzugt eine Konzentration im Bereich von 30 bis 70 Gewichts-%, insbesondere 40 bis 70 Gewichts-%, auf.

Bevorzugt enthält die Zusammensetzung eine solche Menge Calciumnitrat, dass pro 100 Gewichtsteile aller vorhandenen Amine mit primären und/oder sekundären Aminogruppen 0.1 bis 20, bevorzugt 0.2 bis 10, besonders bevorzugt 0.3 bis 7, insbesondere 0.5 bis 5, Gewichtsteile Calciumnitrat vorhanden sind.

Calciumnitrat kann als alleininger Beschleuniger vorhanden sein, oder in Kombination mit weiteren üblicherweise in Epoxidharz-Zusammensetzungen eingesetzten Beschleunigern verwendet werden.

Als Epoxidharz geeignet ist insbesondere ein Epoxid-Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Ein geeignetes Epoxid-Flüssigharz wird auf bekannte Art und Weise erhalten, insbesondere aus der Oxidation der entsprechenden Olefine oder aus der Reaktion von Epichlorhydrin mit den entsprechenden Polyolen, Polyphenolen oder Aminen.

Geeignete Epoxid-Flüssigharze sind insbesondere aromatische Epoxidharze, insbesondere die Glycidylether von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)-ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxid-Flüssigharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt ist ein Flüssigharz auf der Basis eines Bisphenols, insbesondere ein Bisphenol-A Diglycidylether und/oder Bisphenol-F-Diglycidylether, wie sie kommerziell beispielsweise von Olin, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Novolak-Glycidylethern enthalten.

Die Zusammensetzung enthält weiterhin mindestens einem Amin der Formel (I).

Bevorzugt steht A für einen zweiwertigen Rest ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylen, 2,2(4),4-Trimethyl-1,6-hexylen, 1,10-Decylen, 1,11-Undecylen, 2-Butyl-2-ethyl-1,5-pentylen, 1,12-Dodecylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis-(methylen), 1,3-Phenylen-bis(methylen), 1,4-Phenylen-bis(methylen), 3-Aza-1,5-pentylen, 3,6-Diaza-1,8-octylen, 3,6,9-Triaza-1,11-undecylen, 3-Aza-1,6-hexylen und 3,7-Diaza-1,9-nonylen. Diese Amine der Formel (I) sind technisch besonders einfach verfügbar.

Davon bevorzugt sind 1,2-Ethylen, 1,2-Propylen, 2-Methyl-1,5-pentylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), 1,3-Phenylen-bis(methylen), 1,4-Phenylen-bis(methylen), 3-Aza-1,5-pentylen, 3,6-Diaza-1,8-octylen, 3,6,9-Triaza-1,11-undecylen, 3-Aza-1,6-hexylen oder 3,7-Diaza-1,9-nonylen.

Besonders bevorzugt ist der Rest A frei von Stickstoffatomen. Eine solche Zusammensetzung ist besonders wenig empfindlich für Blushing-Effekte. Insbesondere steht A somit für einen zweiwertigen Rest ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylen, 2,2(4),4-Trimethyl-1,6-hexylen, 1,10-Decylen, 1,11-Undecylen, 2-Butyl-2-ethyl-1,5-pentylen, 1,12-Dodecylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), 1,3-Phenylen-bis(methylen) und 1,4-Phenylen-bis(methylen).

Ganz besonders bevorzugt steht A für 1,2-Ethylen, 1,2-Propylen, 1,3-Cyclohexylen-bis(methylen) oder 1,3-Phenylen-bis(methylen). Diese Amine der Formel (I) sind vergleichsweise niedrigviskos und ermöglichen Beschichtungen mit besonders schönen Oberflächen.

Insbesondere bevorzugt ist 1,2-Ethylen. Diese Amine der Formel (I) sind besonders niedrigviskos, besonders einfach verfügbar und ermöglichen eine besonders schnelle Aushärtung.

Insbesondere bevorzugt ist weiterhin 1,2-Propylen. Diese Amine der Formel (I) sind besonders niedrigviskos und ermöglichen besonders schöne Oberflächen.

Bevorzugt steht Y für Hexyl, 2-Ethylhexyl, Octyl, Nonyl, Decyl, Undecyl, Dodecyl oder für einen gegebenenfalls sustituierten 1-Phenylethyl-, 2-Phenylethyl-, Benzyl-, Naphthylmethyl-, Cyclohexylmethyl- oder 2-Cyclohexylethyl-Rest.

Besonders bevorzugt steht Y für einen Rest ausgewählt aus 2-Ethylhexyl, 2-Phenylethyl, Benzyl, 1-Naphthylmethyl und Cyclohexylmethyl. Diese Amine der Formel (I) sind vergleichsweise niedrigviskos und ermöglichen besonders schöne Oberflächen.

Ganz besonders bevorzugt steht Y für Benzyl. Diese Amine der Formel (I) ermöglichen eine besonders schnelle Aushärtung und ganz besonders schöne Oberflächen.

Das Amin der Formel (I) ist bevorzugt ausgewählt aus der Gruppe bestehend aus N-Benzyl-1,2-ethandiamin, N,N'-Dibenzyl-1,2-ethandiamin, N-(1-Naphthylmethyl)-1,2-ethandiamin, N-Cyclohexylmethyl-1,2-ethandiamin, N-Benzyl-1,2-propandiamin, N,N'-Dibenzyl-1,2-propandiamin, N-Benzyl-1,3-bis(aminomethyl)benzol, N,N'-Dibenzyl-1,3-bis(aminomethyl)benzol, N-(2-Ethylhexyl)-1,3-bis(aminomethyl)benzol, N,N'-Bis(2-ethylhexyl)-1,3-bis(aminomethyl)benzol, N-(2-Phenylethyl)-1,3-bis(aminomethyl)benzol (Bestandteil von styrolisiertem 1,3-Bis(aminomethyl)-benzol, erhältlich als Gaskamine^{®} 240 von Mitsubishi Gas Chemical), N-Benzyldiethylentriamin, N-Benzyltriethylentetramin, N¹,N⁴-Dibenzyltriethylentetramin, N-Benzyltetraethylenpentamin, N¹,N⁵-Dibenzyltetraethylenpentamin, N'-Benzyl-N-(3-aminopropyl)ethylendiamin, N"-Benzyl-N,N'-bis(3-aminopropyl)ethylendiamin und N",N‴-Dibenzyl-N,N'-bis(3-aminopropyl)ethylendiamin.

Bevorzugt sind Amine der Formel (I), bei welchen m und n jeweils für 1 stehen. Diese Amine der Formel (I) ermöglichen eine besonders schnelle Aushärtung. Gegebenenfalls enthält ein solches Amin der Formel (I) zusätzlich einen gewissen Anteil an dialkyliertem Amin, also Amin der Formel (I), bei welchem m für 0 und n für 2 stehen. Dabei beträgt das Gewichtsverhältnis zwischen monoalkyliertem (n und m stehen jeweils für 1) und dialkyliertem Amin (n steht für 2) bevorzugt mindestens 50/50, insbesondere mindestens 65/35.

Besonders bevorzugt als Amin der Formel (I) ist N-Benzyl-1,2-ethandiamin oder N-Benzyl-1,2-propandiamin.

N-Benzyl-1,2-ethandiamin enthält gegebenenfalls Anteile von N,N'-Dibenzyl-1,2-ethandiamin. N-Benzyl-1,2-propandiamin enthält gegebenenfalls Anteile von N,N'-Dibenzyl-1,2-propandiamin.

Am meisten bevorzugt als Amin der Formel (I) ist N-Benzyl-1,2-ethandiamin. Gegebenenfalls enthält dieses bis zu 35 Gewichts-% N,N'-Dibenzyl-1,2-ethandiamin bezogen auf die Summe der beiden Amine. Damit wird eine besonders schnelle Aushärtung ermöglicht.

Bevorzugt wird das Amin der Formel (I) als Bestandteil einer Reaktionsmischung aus der partiellen Alkylierung von mindestens einem Amin der Formel A(NH₂)₂ mit mindestens einem Alkylierungsmittel eingesetzt.

Bevorzugt ist die Alkylierung eine reduktive Alkylierung, wobei als Alkylierungsmittel ein Aldehyd oder Keton und Wasserstoff eingesetzt wird.

Bevorzugt wird die reduktive Alkylierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Bei Verwendung von molekularem Wasserstoff wird die reduktive Alkylierung bevorzugt in einer Druckapparatur bei einem Wasserstoff-Druck von 5 bis 150 bar, insbesondere 10 bis 100 bar, gearbeitet. Dies kann in einem Batch-Prozess oder bevorzugt in einem kontinuierlichen Prozess erfolgen.

Die reduktive Alkylierung wird bevorzugt bei einer Temperatur im Bereich von 40 bis 120 °C, insbesondere 60 bis 100 °C, durchgeführt.

Im Fall von kleinen flüchtigen Diaminen, wie insbesondere 1,2-Ethandiamin oder 1,2-Propandiamin, wird dieses bevorzugt im stöchiometrischen Überschuss gegenüber dem Aldehyd oder Keton eingesetzt und nach der Alkylierung nicht umgesetztes Diamin zumindest teilweise aus der Reaktionsmischung entfernt, insbesondere mittels Stripping. Falls gewünscht kann die Reaktionsmischung anschliessend weiter gereinigt werden, insbesondere indem das monoalkylierte Amin mittels Destillation zumindest teilweise vom dialkylierten Amin befreit wird.

Bevorzugt ist das Amin der Formel (I) in einer solchen Menge vorhanden, dass pro mol Epoxidgruppen 0.1 bis 1.2, bevorzugt 0.2 bis 1, insbesondere 0.2 bis 0.8, mol Aminwasserstoffe aus Aminen der Formel (I) vorhanden sind. Für den Fall, dass pro mol Epoxidgruppen weniger als 1 mol Aminwasserstoffe aus Aminen der Formel (I) vorhanden sind, sind bevorzugt weitere gegenüber Epoxidgruppen reaktive Amine vorhanden.

Bevorzugt liegen weder das Epoxidharz noch das Amin der Formel (I), dessen Aushärtung das Calciumnitrat beschleunigt, als Emulsion in Wasser vor. Insbesondere ist die Reaktionsmischung umfassend mindestens ein Epoxidharz, mindestens ein Amin der Formel (I) und Calciumnitrat nicht wasserbasiert. Bevorzugt enthält die Reaktionsmischung weniger als 5 Gewichts-%, besonders bevorzugt weniger als 1 Gewichts-%, Wasser. Eine solche Reaktionsmischung ermöglicht sehr hydrophobe und beständige Materialien.

Bevorzugt enthält die Zusammensetzung neben Calciumnitrat, mindestens einem Epoxidharz und mindestens einem Amin der Formel (I) zusätzlich mindestens einen weiteren Bestandteil ausgewählt aus weiteren Beschleunigern, Reaktivverdünnern, weiteren Aminen, Verdünnern und Füllstoffen.

Bevorzugt umfasst die Epoxidharz-Zusammensetzung
- eine Harz-Komponente enthaltend das Epoxidharz und gegebenenfalls mindestens einen Reaktivverdünner und
- eine Härter-Komponente enthaltend das Amin der Formel (I) und gegebenenfalls weitere Amine,
wobei Calciumnitrat, weitere Beschleuniger und/oder Verdünner als Bestandteil der Harz- und/oder der Härter-Komponente oder als Bestandteil einer weiteren Komponente vorliegen können.

Als weitere Beschleuniger bevorzugt sind Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole, insbesondere Bisphenole, Phenol-Harze oder tertiäre Aminogruppen aufweisende Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Als Beschleuniger bevorzugt sind Säuren, tertiäre Amine oder tertiäre Aminogruppen aufweisende Mannich-Basen. Besonders bevorzugt ist Salicylsäure oder 2,4,6-Tris(dimethylaminomethyl)phenol.

Bevorzugt enthält die Zusammensetzung 2,4,6-Tris(dimethylaminomethyl)phenol, bevorzugt in einem Gewichtsverhältnis von Calciumnitrat zu 2,4,6-Tris(dimethylaminomethyl)phenol im Bereich von 0.1/1 bis 5/1, insbesondere 0.2/1 bis 2/1. Eine solche Kombination ermöglicht Epoxidharz-Zusammensetzungen, welche bei warmen und bei kalten Umgebungsbedingungen schnell zu besonders hoher Endhärte aushärten.

Als Reaktivverdünner bevorzugt sind Epoxidgruppen-haltige Reaktivverdünner, insbesondere Butandioldiglycidylether, Hexandioldiglycidylether, Trimethylolpropandi- oder triglycidlyether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃-bis C₁₅-Alkylglycidylether.

Als weiteres Amin bevorzugt sind aliphatische, cycloaliphatische oder arylaliphatische Polyamine mit mindestens 2, insbesondere mindestens 3, Aminwasserstoffen, wie insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)-cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2(4)-Methyl-1,3-diaminocyclohexan, 2,5(2,6)-Bis(aminomethyl)-bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxa-dodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydro-furane oder andere Polytetrahydrofurandiamine, cycloaliphatische Ethergruppenhaltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, insbesondere Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000 (alle von Huntsman), oder entsprechende Amine von BASF oder Nitroil, 2-Aminoethylpiperazin, 3-Dimethylaminopropylamin (DMAPA), 3-(3-(Dimethylamino)propylamino)propylamin (DMAPAPA), Bis(6-aminohexyl)amin (BHMT), Diethylentriamin (DETA), Triethylentetramin (TETA), Tetraethylenpentamin (TEPA), Pentaethylenhexamin (PEHA) oder höhere Homologe linearer Polyethylenamine, Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, Addukte der obengenannten oder weiterer Polyamine mit Epoxiden oder Epoxidharzen, insbesondere Addukte mit Diepoxiden oder Monoepoxiden, oder Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, oder Mannich-Basen, insbesondere Phenalkamine, also Umsetzungsprodukte von Phenolen, insbesondere Cardanol, mit Aldehyden, insbesondere Formaldehyd, und Polyaminen.

Bevorzugt enthält die Zusammensetzung mindestens ein weiteres Amin ausgewählt aus der Gruppe bestehend aus TMD, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, IPDA, 2(4)-Methyl-1,3-diaminocyclohexan, MXDA, Polyoxypropylendiaminen mit einem mittlerem Molekulargewicht Mₙ im Bereich von 200 bis 500 g/mol, DMAPAPA, BHMT, DETA, TETA, TEPA, PEHA, DPTA, N3-Amin, N4-Amin, Addukte dieser oder weiterer Polyamine mit Mono- oder Diepoxiden und Mannich-Basen.

Davon bevorzugt ist TMD, 1,3-Bis(aminomethyl)cyclohexan, IPDA, MXDA, BHMT, DETA, TETA, TEPA, PEHA, DPTA, N3-Amin, N4-Amin oder Addukte davon mit Mono- oder Diepoxiden, insbesondere Addukte davon mit Bisphenol-A oder Bisphenol-F Diglycidylether. Die Mitverwendung eines solchen Amins kann eine besonders hohe Härte oder eine besonders hohe Glasübergangstemperatur ermöglichen.

Davon bevorzugt ist weiterhin DMAPAPA, insbesondere für die Verwendung in Epoxidharz-Klebstoffen. Damit werden besonders hohe Festigkeiten und Haftkräfte erhalten.

Davon bevorzugt ist weiterhin ein Addukt aus MPMD oder 1,2-Propandiamin mit Kresylglycidylether, insbesondere ortho-Kresylglycidylether. Die Adduktierung wird bevorzugt mit einem Überschuss an MPMD oder 1,2-Propandiamin gegenüber dem Kresylglycidylether durchgeführt und das nicht adduktierte Amin nach der Umsetzung mittels Destillation entfernt.

Bevorzugt kann die Zusammensetzung eine Kombination aus zwei oder mehr der genannten weiteren Amine enthalten.

Besonders bevorzugt als weiteres Amin ist IPDA. Dieses Amin ist breit verfügbar und ermöglicht Epoxidharz-Produkte mit hoher Härte und hoher Glasübergangstemperatur.

Besonders bevorzugt als weiteres Amin ist weiterhin TETA oder TEPA oder N4-Amin. Diese Amine sind breit verfügbar, kostengünstig und ermöglichen Epoxidharz-Produkte mit besonders schneller Aushärtung, hoher Härte und hoher Glasübergangstemperatur.

Bevorzugt kann die Zusammensetzung auch eine Kombination von zwei oder mehr solcher weiterer Amine enthalten.

Bevorzugt werden solche weiteren Amine in einer solchen Menge eingesetzt, dass pro mol Aminwasserstoff aus Aminen der Formel (I) 0.1 bis 10, bevorzugt 0.2 bis 5, mol Aminwasserstoffe aus weiteren Aminen vorhanden sind.

Als Verdünner geeignet ist insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldin-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewschalen-Öl, enthaltend als Hauptbestandteil 3-(8,11,14-Pentadecatrienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide. Bevorzugt sind Verdünner mit einem Siedepunkt von mehr als 200 °C. Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol. Besonders bevorzugt ist Benzylalkohol.

Phenolgruppen-haltige Verdünner zeigen auch eine Wirkung als Beschleuniger.

Bevorzugt enthält die Zusammensetzung nur einen geringen Gehalt an Verdünnern. Bevorzugt enthält sie weniger als 25 Gewichts-%, besonders bevorzugt weniger als 15 Gewichts-%, insbesondere weniger als 10 Gewichts-%, Verdünner. Dies ermöglicht emissionsarme oder emissionsfreie Epoxidharz-Produkte.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Bevorzugt ist Calciumcarbonat, Quarzmehl und Quarzsand.

Gegebenenfalls enthält die Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone;
- Lösemittel;
- weitere Amine, insbesondere Monoamine wie insbesondere Benzylamin oder Furfurylamin oder aromatische Polyamine wie insbesondere 4,4'-, 2,4' und/oder 2,2'-Diaminodiphenylmethan, 2,4- und/oder 2,6-Toluylendiamin, 3,5-Dimethylthio-2,4- und/oder -2,6-toluylendiamin, 3,5-Diethyl-2,4- und/oder -2,6-toluylendiamin;
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamidmodifizierte Melamine;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Additive, insbesondere dispergiertes Paraffinwachs, Filmbildehilfsmittel, Netzmittel, Verlaufmittel, Entschäumer, Entlüfter, Stabilisatoren gegen Oxidation, Wärme, Licht oder UV-Strahlung oder Biozide.

Bevorzugt enthält die Zusammensetzung weitere Hilfs- und Zusatzstoffe, insbesondere Pigmente, Netzmittel, Verlaufsmittel und/oder Entschäumer.

In der Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die in der Zusammensetzung vorhandenen primären und sekundären Aminogruppen und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet dadurch aus.

Die Harz- und die Härter-Komponente der Zusammensetzung werden in voneinander getrennten Gebinden gelagert. Weitere Bestandteile der Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Komponenten kurz vor oder während der Applikation miteinander vermischt. Das Mischungsverhältnis zwischen der Harz- und der Härter-Komponente wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der Komponenten erfolgt mittels eines geeigneten Verfahrens; sie kann kontinuierlich oder batchweise erfolgen. Falls das Vermischen nicht unmittelbar vor der Applikation erfolgt, muss darauf geachtet werden, dass zwischen dem Vermischen der Komponenten und der Applikation nicht zu viel Zeit vergeht und die Applikation innerhalb der Topfzeit erfolgt. Die Vermischung erfolgt insbesondere bei Umgebungstemperatur, welche typischerweise im Bereich von etwa 5 bis 40°C, bevorzugt bei etwa 10 bis 35°C, liegt.

Mit dem Vermischen der beiden Komponenten beginnt die Aushärtung durch chemische Reaktion, wie vorgängig beschrieben. Die Aushärtung erfolgt typischerweise bei einer Temperatur im Bereich von 0 bis 150°C. Bevorzugt erfolgt sie bei Umgebungstemperatur und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Die Applikation der Zusammensetzung erfolgt auf mindestens ein Substrat, wobei die Folgenden besonders geeignet sind:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Aus der Aushärtung der beschriebenen Zusammensetzung wird eine ausgehärtete Zusammensetzung erhalten.

Die beschriebene Zusammensetzung ist vorteilhaft verwendbar als Beschichtung, Primer, Klebstoff, Dichtstoff, Vergussmasse, Giessharz oder als Matrix für Faserverbundwerkstoffe (Composites) wie insbesondere CFK oder GFK. Unter den Begriff der Beschichtung fallen auch Grundierungen, Anstriche, Lacke und Versiegelungen.

Bevorzugt wird die Zusammensetzung als Beschichtung oder Klebstoff verwendet.

Besonders bevorzugt wird die beschriebene Zusammensetzung als Beschichtung verwendet. Als Beschichtung werden dabei flächig aufgebrachte Beläge aller Art verstanden, insbesondere Bodenbeläge, Anstriche, Lacke, Versiegelungen, Grundierungen, Primer oder Schutzbeschichtungen, insbesondere auch solche für schweren Korrosionsschutz.

Besonders geeignet ist die Zusammensetzung als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Besonders vorteilhaft wird die beschriebene Zusammensetzung in emissionsarmen Beschichtungen mit Öko-Gütesiegeln, beispielsweise nach Emicode (EC1 Plus), AgBB, DIBt, Der Blaue Engel, AFSSET, RTS (M1) und US Green Building Council (LEED), verwendet.

Für die Verwendung als Beschichtung weist die Zusammensetzung vorteilhaft eine flüssige Konsistenz mit niedriger Viskosität und guten Verlaufseigenschaften auf. Die vermischte Zusammensetzung wird innerhalb der Topfzeit typischerweise flächig als dünner Film mit einer Schichtdicke von etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl. Bei der Aushärtung entstehen typischerweise weitgehend homogene, glänzende und nichtklebrige Filme von hoher Härte, welche eine gute Haftung zu verschiedensten Substraten aufweisen.

Ein weiterer Gegenstand der Erfindung ist ein Verfahren zum Beschichten umfassend die Schritte
(i) Vermischen der Komponenten der beschriebenen Zusammensetzung,
(ii) Applizieren der vermischten Zusammensetzung auf ein Substrat innerhalb der Topfzeit,
gefolgt von der Aushärtung der vermischten Zusammensetzung.

Auf die vollständig oder teilweise ausgehärtete Zusammensetzung kann eine weitere Beschichtung appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Weiterhin besonders bevorzugt wird die beschriebene Zusammensetzung als Klebstoff verwendet. Typischerweise weist sie bei der Verwendung als Klebstoff nach dem Vermischen der Komponenten eine pastöse Konsistenz mit strukturviskosen Eigenschaften auf. Bei der Applikation wird der vermischte Klebstoff innerhalb der Topfzeit auf mindestens eines der zu verklebenden Substrate aufgetragen und die beiden Substrate innerhalb der Offenzeit des Klebstoffs zu einer Verklebung gefügt.

Der vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Klebstoff ist besonders geeignet für Verwendungen in der Bauindustrie, insbesondere für die Armierung von Bauwerken mittels Stahllamellen oder Lamellen aus Kohlefaser-verstärkten Composite-Kunststoffen (CFK), für Konstruktionen, welche geklebte Beton-Fertigteile enthalten, insbesondere Brücken oder Betontürme für beispielsweise Windkraftanlagen, Schächte, Rohrleitungen oder Tunnels, oder für Konstruktionen, welche geklebte Natursteine, keramische Elemente oder Teile aus Faserzement, Stahl, Gusseisen, Aluminium, Holz oder Polyester enthalten, für die Verankerung von Dübeln oder Stahlstäben in Bohrlöchern, für die Fixierung von beispielsweise Geländern, Brüstungen oder Türrahmen, für Reparaturen wie insbesondere die Verfüllung von Kanten, Löchern oder Fugen bei der Betoninstandsetzung, oder für das Aufkleben von Folien aus Polyvinylchlorid (PVC), flexibilisiertem Polyolefin (Combiflex^{®}) oder haftungsmodifiziertem chlorsulfoniertem Polyethylen (Hypalon^{®}) auf Beton oder Stahl. Weitere Einsatzgebiete betreffen das strukturelle Kleben in der Bau- oder Fertigungsindustrie, insbesondere als Klebemörtel, Montageklebstoff, Armierungsklebstoff wie insbesondere für das Verkleben von Lamellen aus CFK oder Stahl auf Beton, Mauerwerk oder Holz, als Element-Klebstoff für beispielsweise Brückenelemente, Sandwichelementklebstoff, Fassadenelementklebstoff, Verstärkungsklebstoff, Karrosserieklebstoff oder Halbschalenklebstoff für Rotorblätter von Windturbinen.

Ebenfalls geeignet ist ein solcher Epoxidharz-Klebstoff für das Verfüllen von Hohlräumen wie Rissen, Spalten oder Bohrlöchern, wobei der Klebstoff in den Hohlraum gefüllt oder injiziert wird und nach der Aushärtung diesen ausfüllt und die Flanken des Hohlraums kraftschlüssig miteinander verbindet bzw. verklebt.

Ein weiterer Gegenstand der Erfindung ist ein Verfahren zum Verkleben umfassend die Schritte
(i) Vermischen der Komponenten der beschriebenen Zusammensetzung,
(ii) Applizieren der vermischten Zusammensetzung innerhalb der Topfzeit,
   - entweder auf mindestens eines der zu verklebenden Substrate und Fügen der Substrate zu einer Verklebung innerhalb der Offenzeit,
   - oder in einen Hohlraum oder Spalt zwischen mehreren Substraten und gegebenenfalls Einfügen eines Ankers in den Hohlraum oder Spalt innerhalb der Offenzeit,
gefolgt von der Aushärtung der vermischten Zusammensetzung.

Als "Anker" wird dabei insbesondere ein Armierungseisen, ein Gewindestab oder ein Bolzen bezeichnet. Ein solcher wird insbesondere so in einer Mauer, Wand, Decke oder in einem Fundament eingeklebt bzw. verankert, dass ein Teil davon kraftschlüssig verklebt ist und ein Teil davon vorsteht und konstruktiv belastet werden kann.

Verklebt werden können gleichartige oder verschiedene Substrate.

Aus der Applikation und Aushärtung der beschriebenen Zusammensetzung bzw. aus dem Verfahren zum Beschichten oder dem Verfahren zum Verkleben wird ein Artikel erhalten, welcher mit der Zusammensetzung beschichtet oder verklebt ist. Dieser Artikel kann ein Bauwerk oder ein Teil davon sein, insbesondere ein Bauwerk des Hoch- oder Tiefbaus, ein Büro, eine Industriehalle, eine Turnhalle, ein Kühlraum, ein Silo, eine Brücke, ein Dach, ein Treppenhaus, ein Balkon, eine Terrasse oder ein Parkdeck, oder er kann ein industrielles Gut oder ein Konsumgut sein, insbesondere ein Pier, eine Offshore-Plattform, ein Schleusentor, ein Kran, eine Spundwand, eine Rohrleitung oder ein Rotorblatt einer Windkraftanlage, oder ein Transportmittel wie insbesondere ein Automobil, ein Lastkraftwagen, ein Schienenfahrzeug, ein Schiff, ein Flugzeug oder ein Helikopter, oder ein Anbauteil davon.

Ein weiterer Gegenstand der Erfindung ist somit ein Artikel, erhalten aus dem beschriebenen Verfahren zum Beschichten oder aus dem beschriebenen Verfahren zum Verkleben.

Die beschriebene Zusammensetzung zeichnet sich durch vorteilhafte Eigenschaften aus. Sie ist einfach und gut verarbeitbar, insbesondere als Beschichtung, härtet schnell aus und ist bald begehbar und/oder bearbeitbar, insbesondere auch bei feuchtkalten Bedingungen. Dabei entstehen insbesondere mechanisch hochwertige Beschichtungen mit schöner Oberfläche und geringer Neigung zum Vergilben.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1 °C und eine relative Luftfeuchtigkeit von 50±5% bezeichnet.

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-PlattenAbstand 0.05 mm, Scherrate 10 s⁻¹) gemessen.

Die **Aminzahl** wurde durch Titration bestimmt (mit 0.1_{N} HClO₄ in Essigsäure gegen Kristallviolett).

### Verwendete Substanzen und Abkürzungen:

| | |
|---|---|
| Sikafloor^{®}-264N (A) | Sikafloor^{®}-264N Komponente A (RAL 5005), gefüllte pigmentierte Harzkomponente einer Epoxidharz-Bodenbeschichtung, EEW 450 g/Eq (von Sika) |
| B-EDA | N-Benzyl-1,2-ethandiamin, hergestellt wie nachfolgend beschrieben, AHEW 50.1 g/Eq |
| B-PDA | N-Benzyl-1,2-propandiamin, hergestellt wie nachfolgend beschrieben, AHEW 54.8 g/Eq |
| TETA | Triethylentetramin, AHEW ca. 28 g/Eq (technisch, von Huntsman) |
| Addukt-1 | Addukt aus 1,2-Propylendiamin und technischem o-Kresylglycidylether, hergestellt wie nachfolgend beschrieben, AHEW 90 g/Eq |
| Jeffamine^{®} D-230 | Polyoxypropylendiamin mit mittlerem Molekulargewicht ca. 240 g/mol, AHEW 60 g/Eq (von Huntsman) |
| Ca-Nitrat-Lösung | 50 Gewichts-% Calciumnitrat-Tetrahydrat in Wasser |
| Ancamine^{®} K54 | 2,4,6-Tris(dimethylaminomethyl)phenol (von Air Products) |

### N-Benzyl-1,2-ethandiamin (B-EDA):

In einem Rundkolben wurden 180.3 g (3 mol) 1,2-Ethylendiamin unter Stickstoffatmosphäre bei Raumtemperatur vorgelegt. Unter gutem Rühren wurde langsam eine Lösung aus 106.0 g (1 mol) Benzaldehyd in 1200 ml Isopropanol dazugetropft und 2 Stunden nachgerührt. Die Reaktionsmischung wurde anschliessend bei einem Wasserstoff-Druck von 80 bar, einer Temperatur von 80 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Ethylendiamin, Wasser und Isopropanol entfernt wurden. Die so erhaltene Reaktionsmischung war eine klare, leicht gelbliche Flüssigkeit mit einer Aminzahl von 678 mg KOH/g. Davon wurden 50 g bei 80 °C unter Vakuum destilliert, wobei 31.3 g Destillat bei einer Dampftemperatur von 60 bis 65 °C und 0.06 mbar aufgefangen wurden. Erhalten wurde eine farblose Flüssigkeit mit einer Viskosität von 8.3 mPa·s bei 20 °C, einer Aminzahl von 750 mg KOH/g und einer mittels GC bestimmten Reinheit von > 97 %.

### N-Benzyl-1,2-propandiamin (B-PDA):

In einem Rundkolben wurden 444.8 g (6 mol) 1,2-Propandiamin unter Stickstoffatmosphäre bei Raumtemperatur vorgelegt. Unter gutem Rühren wurde langsam eine Lösung aus 212.2 g (2 mol) Benzaldehyd in 1'500 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Propandiamin, Isopropanol und Wasser entfernt wurden. Es wurde eine klare, leicht gelbliche Flüssigkeit erhalten. Davon wurden 300 g bei 80 °C unter Vakuum destilliert, wobei 237.5 g Destillat bei einer Dampftemperatur von 60 bis 65 °C und 0.08 mbar aufgefangen wurden. Erhalten wurde eine farblose Flüssigkeit mit einer Aminzahl von 682 mg KOH/g, welche gemäss ¹H-NMR eine Mischung aus N¹-Benzyl-1,2-propandiamin und N²-Benzyl-1,2-propandiamin im Verhältnis von ca. 2/1 darstellte und eine GC-Reinheit von >97% aufwies.

### Addukt-1:

Es wurden 4.15 kg 1,2-Propandiamin unter Stickstoffatmosphäre vorgelegt, auf 70°C aufgewärmt und dann unter gutem Rühren langsam mit 2.93 kg Araldite^{®} DY-K (o-Kresylglycidylether technisch, von Huntsman) versetzt, wobei die Temperatur der Reaktionsmischung 70 bis 80°C betrug. Nach 1 Stunde bei 80°C wurde die Reaktionsmischung abgekühlt und die flüchtigen Bestandteile destillativ mittels Dünnschichtverdampfer (0.5-1 mbar, Manteltemperatur 115°C) entfernt.

### Herstellung von Epoxidharz-Zusammensetzungen:

### Beispiele 1 bis 17:

Für jedes Beispiel wurden die in den Tabellen 1 bis 3 angegebenen Inhaltsstoffe der Härter-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Als Harz-Komponente wurde Sikafloor^{®}-264N Komp. A (blau) (von Sika) in der in den Tabellen 1 bis 3 angegebenen Menge (in Gewichtsteilen) eingesetzt. Anschliessend wurden die beiden Komponenten jeder Zusammensetzung mittels des Zentrifugalmischers zu einer homogenen Flüssigkeit verarbeitet und diese unverzüglich folgendermassen geprüft: 10 Minuten nach dem Vermischen wurde die Viskosität bei 20°C gemessen **("Viskosität (10')").**

Für die Bestimmung der **Shore D-Härte** nach DIN 53505 wurden je zwei zylindrische Prüfkörper (Durchmesser 20 mm, Dicke 5 mm) hergestellt. Einer wurde im Normklima gelagert und die Härte nach 1 Tag und nach 2 Tagen gemessen (1d NK) bzw. (2d NK), der andere wurde bei 8°C und 80% relativer Feuchtigkeit gelagert und die Härte nach 1 Tag und nach 2 Tagen im kalten Zustand gemessen (1d 8°/80%) bzw. (2d 8°/80%).

Ein erster Film wurde in einer Schichtdicke von 500 µm auf eine Glasplatte aufgezogen und dieser im Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit "**Aspekt (NK)**" bezeichnet). Als "schön" wurde dabei ein Film bezeichnet, welcher eine glänzende und nichtklebrige Oberfläche ohne Struktur aufwies. Als "Struktur" wird dabei jegliche Art von Zeichnung oder Muster auf der Oberfläche bezeichnet. Als "matt" wurde ein Film mit einer nichtklebrigen Oberfläche ohne Struktur mit reduziertem Glanz bezeichnet.

Ein zweiter Film wurde in einer Schichtdicke von 500 µm auf eine Glasplatte aufgezogen und dieser unmittelbar nach dem Applizieren während 7 Tagen bei 8°C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt (in den Tabellen mit "**Aspekt (8°/80%)**" bezeichnet), auf die gleiche Weise wie für den Aspekt (NK) beschrieben. Dabei wurde jeweils auch die Anzahl und Art der sichtbaren Marken angegeben, die im Film durch den feuchten Schwamm oder den aufgesetzten Deckel entstanden waren. Als "Blushing" wurde die Anzahl weiss verfärbte Flecken angegeben. Als "Ring" wurde die Stärke eines allfälligen ringförmigen Abdrucks durch Einsinken des ersten, 24h nach Applikation aufgesetzten Deckels angegeben. Ein solcher ringförmiger Abdruck zeigt an, dass die Beschichtung noch nicht begehbar ist. An den so ausgehärteten Filmen wurde wiederum die Königshärte bestimmt, jeweils nach 7 Tagen bei 8°C und 80% relativer Feuchtigkeit ("Königsh. (7d 8°/80%)"), dann nach weiteren 2 Tagen im NK ("Königsh. (+2d NK)") bzw. 7 Tagen im NK ("Königsh. (+7d NK)") bzw. 14d im NK ("Königsh. (+14d NK)").

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet (**Q-Sun (72h)**). Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte bis 5 stehen für eine leichte Vergilbung.

Die Resultate sind in den Tabellen 1 bis 3 angegeben.

Die mit "(Ref.)" bezeichneten Beispiele sind Vergleichsbeispiele.

**Tabelle 1: Zusammensetzung und Eigenschaften der Beispiele 1 bis 6. ¹ gelöst in B-EDA**

| **Beispiel** | | **1 (Ref.)** | **2** | **3 (Ref.)** | **4 (Ref.)** | **5** | **6 (Ref.)** |
|---|---|---|---|---|---|---|---|
| **Harz-Komp.:** | | | | | | | |
| Sikafloor^{®}-264N (A) | | 450.0 | 450.0 | 450.0 | 450.0 | 450.0 | 450.0 |
| **Härter-Komp.** : | | | | | | | |
| | **B-EDA** | 50.1 | 50.1 | 50.1 | 50.1 | 50.1 | 50.1 |
| Ca-Nitrat-Lösung | | - | 2.0 | - | - | 2.0 | - |
| Salicylsäure¹ | | - | - | 2.0 | - | - | 2.0 |
| Ancamine^{®} K54 | | - | - | - | 2.0 | 2.0 | 2.0 |
| Viskosität (10') [Pa·s] | | 2.2 | 2.6 | 2.6 | 2.2 | 2.4 | 2.5 |
| Shore D | (1d NK) | 74 | 78 | 77 | 80 | 78 | 78 |
| | (2d NK) | 77 | 80 | 80 | 80 | 80 | 80 |
| Shore D | (1d 8°/80%) | 29 | 61 | 51 | 45 | 62 | 53 |
| | (2d 8°/80%) | 68 | 75 | 74 | 72 | 64 | 74 |
| Königshärte [s] | (1d NK) | 63 | 78 | 67 | 97 | 104 | 95 |
| | (2d NK) | 88 | 104 | 104 | 118 | 140 | 132 |
| | (4d NK) | 99 | 120 | 115 | 130 | 147 | 139 |
| | (7d NK) | 115 | 121 | 131 | 126 | 151 | 157 |
| | (14d NK) | 118 | 126 | 140 | 137 | 156 | 162 |
| Aspekt (NK) | | schön | schön | schön | schön | schön | schön |
| Q-Sun (72h) ΔE | | 2.9 | 2.7 | 5.4 | 3.8 | 4.7 | 6.4 |
| Königsh. [s] | (7d 8°/80%) | 17 | 21 | 20 | 25 | 24 | 27 |
| | (+2d NK) | 35 | 38 | 42 | 55 | 57 | 56 |
| | (+7d NK) | 52 | 53 | 59 | 70 | 76 | 76 |
| | (+14d NK) | 67 | 67 | 78 | 89 | 93 | 95 |
| Aspekt (8°/80%) | | schön | schön | matt | matt | schön | matt |
| Blushing | | 3 | 3 | 3 | 3 | 3 | 3 |
| Ring | | mittel | kein | stark | leicht | kein | leicht |

**Tabelle 2: Zusammensetzung und Eigenschaften der Beispiele 7 bis 12.**

| **Beispiel** | | **7 (Ref.)** | **8** | **9** | **10 (Ref.)** | **11** | **12 (Ref.)** |
|---|---|---|---|---|---|---|---|
| **Harz-Komp.:** | | | | | | | |
| Sikafloor^{®}-264N (A) | | 450.0 | 450.0 | 450.0 | 450.0 | 450.0 | 450.0 |
| **Härter-Komp.** : | | | | | | | |
| | **B-EDA** | 50.1 | 50.1 | 50.1 | 50.1 | 42.6 | 42.6 |
| | **TETA** | - | - | - | - | 4.2 | 4.2 |
| Benzylalkohol | | 10.0 | 10.0 | 10.0 | 10.0 | 10.0 | 10.0 |
| Ca-Nitrat-Lösung | | - | 2.0 | 2.0 | - | 2.0 | - |
| Ancamine^{®} K54 | | - | - | 2.0 | 2.0 | 2.0 | 2.0 |
| Viskosität (10') [Pa·s] | | 1.4 | 1.9 | 1.5 | 1.4 | 1.7 | 1.4 |
| Shore D | (1d NK) | 48 | 52 | 53 | 64 | 60 | 70 |
| | (2d NK) | 64 | 64 | 72 | 73 | 74 | 76 |
| Shore D | (1d 8°/80%) | 8 | 33 | 23 | 13 | 43 | 32 |
| | (2d 8°/80%) | 57 | 69 | 64 | 70 | 73 | 72 |
| Königshärte [s] | (1d NK) | 17 | 34 | 48 | 41 | 63 | 62 |
| | (2d NK) | 46 | 56 | 78 | 81 | 91 | 90 |
| | (4d NK) | 45 | 73 | 98 | 192 | 105 | 105 |
| | (7d NK) | 73 | 85 | 104 | 109 | 122 | 113 |
| | (14d NK) | 92 | 104 | 113 | 113 | 136 | 125 |
| Aspekt (NK) | | schön | schön | schön | schön | schön | schön |
| Q-Sun (72h) ΔE | | 2.7 | 4.0 | 4.7 | 3.4 | 4.2 | 2.1 |
| Königsh. [s] | (7d 8°/80%) | 7 | 10 | 13 | 10 | 17 | 15 |
| | (+2d NK) | 14 | 20 | 21 | 18 | 39 | 42 |
| | (+7d NK) | 14 | 24 | 39 | 35 | 65 | 67 |
| | (+14d NK) | 35 | 43 | 60 | 60 | 87 | 85 |
| Aspekt (8°/80%) | | schön | schön | schön | schön | schön | schön |
| Blushing | | 1 | 0 | 1 | 1 | 1 | 1 |
| Ring | | mittel | kein | kein | leicht | kein | kein |

**Tabelle 3: Zusammensetzung und Eigenschaften der Beispiele 13 bis 17. "n.m." steht für "nicht messbar" (zu weich)**

| **Beispiel** | | **13** | **14 (Ref.)** | **15** | **16** | **17 (Ref.)** |
|---|---|---|---|---|---|---|
| **Harz-Komp.:** | | | | | | |
| Sikafloor^{®}-264N (A) | | 450.0 | 450.0 | 450.0 | 450.0 | 450.0 |
| **Härter-Komp.:** | | | | | | |
| | **B-EDA** | 32.6 | - | - | - | - |
| | **B-PDA** | - | 54.8 | 54.8 | 54.8 | 54.8 |
| Addukt-1 | | 13.5 | - | - | - | - |
| Jeffamine^{®} D-230 | | 12.0 | - | - | - | - |
| Ca-Nitrat-Lösung | | 2.0 | - | 2.0 | 2.0 | - |
| Ancamine^{®} K54 | | 2.0 | - | - | 2.0 | 2.0 |
| Viskosität (10') [Pa·s] | | 2.9 | 1.9 | 1.9 | 1.7 | 1.3 |
| Shore D | (1d NK) | 71 | 53 | 73 | 70 | 64 |
| | (2d NK) | 76 | 74 | 79 | 77 | 76 |
| Shore D | (1d 8°/80%) | 5 | n.m. | n.m. | n.m. | n.m. |
| | (2d 8°/80%) | 58 | 29 | 60 | 62 | 48 |
| Königshärte | (1d NK) | 68 | 85 | 94 | 104 | 108 |
| [s] | (2d NK) | 113 | 144 | 154 | 184 | 175 |
| | (4d NK) | 154 | 164 | 175 | 189 | 189 |
| | (7d NK) | 168 | 188 | 202 | 204 | 200 |
| | (14d NK) | 193 | 193 | 204 | 208 | 204 |
| Aspekt (NK) | | schön | schön | schön | schön | schön |
| Q-Sun (72h) ΔE | | 5.9 | 1.9 | 3.5 | 4.6 | 4.1 |
| Königsh. | (7d 8°/80%) | 23 | 53 | 62 | 69 | 67 |
| [s] | (+2d NK) | 67 | 134 | 147 | 148 | 146 |
| | (+7d NK) | 80 | 140 | 157 | 168 | 165 |
| | (+14d NK) | 84 | 140 | 158 | 169 | 165 |
| Aspekt (8°/80%) | | schön | schön | schön | schön | matt |
| Blushing | | 1 | 1 | 1 | 1 | 2 |
| Ring | | leicht | stark | leicht | leicht | stark |

## Patentansprüche

1. Zusammensetzung enthaltend Calciumnitrat, mindestens ein Epoxidharz und mindestens ein Amin der Formel (I),
(H₂N)ₘ-A-(NH-Y)ₙ (I)
wobei
m für 0 oder 1, n für 1 oder 2 und (m+n) für 2 stehen,
A für einen gegebenenfalls Stickstoffatome oder cyclische oder aromatische Anteile enthaltenden Alkylenrest mit 2 bis 10 C-Atomen steht, und
Y für einen Alkyl-, Cycloalkyl- oder Aralkylrest mit 1 bis 20 C-Atomen steht.

2. Zusammensetzung gemäss Anspruch 1, **dadurch gekennzeichnet, dass** Calciumnitrat als wässrige Lösung vorhanden ist.

3. Zusammensetzung gemäss einem der Ansprüche 1 oder 2, **dadurch gekennzeichnet, dass** pro 100 Gewichtsteile aller vorhandenen Amine mit primären und/oder sekundären Aminogruppen 0.1 bis 20, bevorzugt 0.2 bis 10, besonders bevorzugt 0.3 bis 7, insbesondere 0.5 bis 5, Gewichtsteile Calciumnitrat vorhanden sind.

4. Zusammensetzung gemäss einem der Ansprüche 1 bis 3, **dadurch gekennzeichnet, dass** A für 1,2-Ethylen, 1,2-Propylen, 1,3-Cyclohexylen-bis(methylen) oder 1,3-Phenylen-bis(methylen) steht.

5. Zusammensetzung gemäss einem der Ansprüche 1 bis 4, **dadurch gekennzeichnet, dass** Y für einen Rest ausgewählt aus 2-Ethylhexyl, 2-Phenylethyl, Benzyl, 1-Naphthylmethyl und Cyclohexylmethyl steht.

6. Zusammensetzung gemäss einem der Ansprüche 1 bis 5, **dadurch gekennzeichnet, dass** m und n jeweils für 1 stehen.

7. Zusammensetzung gemäss einem der Ansprüche 1 bis 6, **dadurch gekennzeichnet, dass** das Amin der Formel (I) N-Benzyl-1,2-ethandiamin oder N-Benzyl-1,2-propandiamin ist.

8. Zusammensetzung gemäss einem der Ansprüche 1 bis 7, **dadurch gekennzeichnet, dass** pro mol Epoxidgruppen 0.1 bis 1.2, bevorzugt 0.2 bis 1, insbesondere 0.2 bis 0.8, mol Aminwasserstoffe aus Aminen der Formel (I) vorhanden sind.

9. Zusammensetzung gemäss einem der Ansprüche 1 bis 8, **dadurch gekennzeichnet, dass** sie zusätzlich mindestens einen weiteren Bestandteil ausgewählt aus weiteren Beschleunigern, Reaktivverdünnern, weiteren Aminen, Verdünnern und Füllstoffen enthält.

10. Zusammensetzung gemäss einem der Ansprüche 1 bis 9, **dadurch gekennzeichnet, dass** sie 2,4,6-Tris(dimethylaminomethyl)phenol enthält.

11. Zusammensetzung gemäss einem der Ansprüche 1 bis 10, **dadurch gekennzeichnet, dass** sie mindestens ein weiteres Amine ausgewählt aus der Gruppe bestehend aus 2,2(4),4-Trimethyl-1,6-hexandiamin, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, 1-Amino-3-aminomethyl-3,5,5-trimethylcyclohexan, 2(4)-Methyl-1,3-diaminocyclohexan, 1,3-Bis(aminomethyl)benzol, Polyoxypropylendiaminen mit einem mittlerem Molekulargewicht Mₙ im Bereich von 200 bis 500 g/mol, 3-(3-(Dimethylamino)propylamino)propylamin, Bis(6-aminohexyl)amin, Diethylentriamin, Triethylentetramin, Tetraethylenpentamin, Pentaethylenhexamin, Dipropylentriamin, N-(2-Aminoethyl)-1,3-propandiamin, N,N'-Bis(3-aminopropyl)ethylendiamin, Addukte dieser oder weiterer Polyamine mit Mono- oder Diepoxiden und Mannich-Basen enthält.

12. Zusammensetzung gemäss einem der Ansprüche 1 bis 11, **dadurch gekennzeichnet, dass** sie mindestens einen Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, Diisopropylnaphthalin und Cardanol enthält.

13. Verfahren zum Beschichten umfassend die Schritte
(i) Vermischen der Komponenten der Zusammensetzung gemäss einem der Ansprüche 1 bis 12,
(ii) Applizieren der vermischten Zusammensetzung auf ein Substrat innerhalb der Topfzeit,
gefolgt von der Aushärtung der vermischten Zusammensetzung.

14. Verfahren zum Verkleben umfassend die Schritte
(i) Vermischen der Komponenten der Zusammensetzung gemäss einem der Ansprüche 1 bis 12,
(ii) Applizieren der vermischten Zusammensetzung innerhalb der Topfzeit,
- entweder auf mindestens eines der zu verklebenden Substrate und Fügen der Substrate zu einer Verklebung innerhalb der Offenzeit,
- oder in einen Hohlraum oder Spalt zwischen mehreren Substraten und gegebenenfalls Einfügen eines Ankers in den Hohlraum oder Spalt innerhalb der Offenzeit,
gefolgt von der Aushärtung der vermischten Zusammensetzung.

15. Artikel erhalten aus dem Verfahren gemäss einem der Ansprüche 13 oder 14.

## Claims

1. A composition comprising calcium nitrate, at least one epoxy resin and at least one amine of the formula (I),
(H₂N)ₘ-A-(NH-Y)ₙ (I)
where
m is 0 or 1, n is 1 or 2 and (m+n) is 2,
A is an alkylene radical that optionally contains nitrogen atoms or cyclic or aromatic components and has 2 to 10 carbon atoms, and
Y is an alkyl, cycloalkyl or aralkyl radical having 1 to 20 carbon atoms.

2. The composition as claimed in claim 1, **characterized in that** calcium nitrate is in the form of an aqueous solution.

3. The composition as claimed either of claims 1 and 2, **characterized in that** 0.1 to 20, preferably 0.2 to 10, more preferably 0.3 to 7, especially 0.5 to 5, parts by weight of calcium is present per 100 parts by weight of all amines having primary and/or secondary amino groups present.

4. The composition as claimed in any of claims 1 to 3, **characterized in that** A is 1,2-ethylene, 1,2-propylene, 1,3-cyclohexylenebis(methylene) or 1,3-phenylenebis(methylene).

5. The composition as claimed in any of claims 1 to 4, **characterized in that** Y is a radical selected from 2-ethylhexyl, 2-phenylethyl, benzyl, 1-naphthylmethyl and cyclohexylmethyl.

6. The composition as claimed in any of claims 1 to 5, **characterized in that** m and n are each 1.

7. The composition as claimed in any of claims 1 to 6, **characterized in that** the amine of the formula (I) is N-benzylethane-1,2-diamine or N-benzylpropane-1,2-diamine.

8. The composition as claimed in any of claims 1 to 7, **characterized in that** 0.1 to 1.2, preferably 0.2 to 1, especially 0.2 to 0.8, mol of amine hydrogens from amines of the formula (I) is present per mole of epoxy groups.

9. The composition as claimed in any of claims 1 to 8, **characterized in that** it additionally comprises at least one further constituent selected from further accelerators, reactive diluents, further amines, thinners and fillers.

10. The composition as claimed in any of claims 1 to 9, **characterized in that** it comprises 2,4,6-tris(dimethylaminomethyl)phenol.

11. The composition as claimed in any of claims 1 to 10, **characterized in that** it comprises at least one further amine selected from the group consisting of 2,2(4),4-trimethylhexane-1,6-diamine, 1,2-, 1,3- or 1,4-diaminocyclohexane, 1,3-bis(aminomethyl)cyclohexane, 1,4-bis(aminomethyl)cyclohexane, bis(4-aminocyclohexyl)methane, 1-amino-3-aminomethyl-3,5,5-trimethylcyclohexane, 2(4)-methyl-1,3-diaminocyclohexane, 1,3-bis(aminomethyl)benzene, polyoxypropylenediamines having an average molecular weight Mₙ in the range from 200 to 500 g/mol, 3-(3-(dimethylamino)propylamino)propylamine, bis(6-aminohexyl)amine, diethylenetriamine, triethylenetetramine, tetraethylenepentamine, pentaethylenehexamine, dipropylenetriamine, N-(2-aminoethyl)propane-1,3-diamine, N,N'-bis(3-aminopropyl)ethylenediamine, adducts of these or further polyamines with mono- or diepoxides, and Mannich bases.

12. The composition as claimed in any of claims 1 to 11, **characterized in that** it comprises at least one thinner selected from the group consisting of benzyl alcohol, styrenized phenol, ethoxylated phenol, aromatic hydrocarbon resins containing phenol groups, diisopropylnaphthalene and cardanol.

13. A method of coating, comprising the steps of
(i) mixing the components of the composition as claimed in any of claims 1 to 12,
(ii) applying the mixed composition to a substrate within the pot life, followed by the curing of the mixed composition.

14. A method of bonding, comprising the steps of
(i) mixing the components of the composition as claimed in any of claims 1 to 12,
(ii) applying the mixed composition within the pot life,
- either to at least one of the substrates to be bonded and joining the substrates to form a bond within the open time,
- or into a cavity or gap between two or more substrates and optionally inserting an anchor into the cavity or gap within the open time,
followed by the curing of the mixed composition.

15. An article obtained from the method as claimed in either of claims 13 and 14.

## Revendications

1. Composition contenant du nitrate de calcium, au moins une résine époxyde et au moins une amine de formule (I),
(H₂N)ₘ-A-(NH-Y)ₙ (I)
dans laquelle
m représente 0 ou 1, n représente 1 ou 2 et (m + n) vaut 2,
A représente un radical alkylène ayant 2 à 10 atomes de carbone, contenant éventuellement des atomes d'azote ou des parties cycliques ou aromatiques, et
Y représente un radical alkyle, cycloalkyle ou aralkyle ayant 1 à 20 atomes de carbone.

2. Composition selon la revendication 1, **caractérisée en ce que** le nitrate de calcium est présent sous forme d'une solution aqueuse.

3. Composition selon l'une des revendications 1 ou 2, **caractérisée en ce qu'**elle contient, pour 100 parties en poids de toutes les amines présentes comportant des groupes primaires et/ou secondaires, 0,1 à 20, de préférence 0,2 à 10, d'une manière particulièrement préférée 0,3 à 7, en particulier 0,5 à 5 parties en poids de nitrate de calcium.

4. Composition selon l'une des revendications 1 à 3, **caractérisée en ce que** A représente un radical 1,2-éthylène, 1,2-propylènè, 1,3-cyclohexylène-bis(méthylène) ou 1,3-phénylène-bis(méthylène).

5. Composition selon l'une des revendications 1 à 4, **caractérisée en ce que** Y représente un radical choisi parmi les radicaux 2-éthylhexyle, 2-phényléthyle, benzyle, 1-naphtylméthyle et cyclohexylméthyle.

6. Composition selon l'une des revendications 1 à 5, **caractérisée en ce que** m et n représentent chacun 1.

7. Composition selon l'une des revendications 1 à 6, **caractérisée en ce que** l'amine de formule (1) est la N-benzyl-1,2-éthanediamine ou la N-benzyl-1,2-propanediamine.

8. Composition selon l'une des revendications 1 à 7, **caractérisée en ce qu'**elle contient par mole de groupes époxydes 0,1 à 1,2, de préférence 0,2 à 1, en particulier 0,2 à 0,8 mole d'hydrogènes d'aminé, provenant d'aminés de formule (I).

9. Composition selon l'une des revendications 1 à 8, **caractérisée en ce qu'**elle contient en outre au moins un constituant supplémentaire choisi parmi d'autres accélérateurs, des diluants réactifs, d'autres aminés, des diluants et des charges.

10. Composition selon l'une des revendications 1 à 9, **caractérisée en ce qu'**elle contient du 2,4,6-tris(diméthylaminométhyl) phénol.

11. Composition selon l'une des revendications 1 à 10, **caractérisée en ce qu'**elle contient au moins une autre amine choisie dans le groupe consistant en la 2,2(4),4-triméthyl-1,6-hexanediamine, le 1,2-, le 1,3- ou le 1,4-diaminocyclohexane, le 1,3-bis(aminométhyl)cyclohexane, le 1,4-bis(aminométhyl)cyclohexane, le bis(4-aminocyclohexyl)méthane, le 1-amino-3-aminométhyl-3,5,5-triméthylcyclohexane, le 2(4)-méthyl-1,3-diaminocyclohexane, le 1,3-bis(aminométhyl)benzène, les polyoxypropylènediamines ayant une masse moléculaire moyenne Mₙ dans la plage de 200 à 500 g/mol, la 3-(3-(diméthylamino)propylamino)propylamine, la bis(6-aminohexyl)amine, la diéthylènetriamine, la triéthylènetétramine, la tétraéthylènepentamine, la pentaéthylènehexamine, la dipropylènetriamine, la N-(2-aminoéthyl)-1,3-propanediamine, la N,N'-bis(3-aminopropyl)éthylènediamine, les produits d'addition de ces dernières ou d'autres polyamines avec des mono- ou des diépoxydes et des bases de Mannich.

12. Composition selon l'une des revendications 1 à 11, **caractérisée en ce qu'**elle contient au moins un diluant choisi dans le groupe consistant en l'alcool benzylique, le phénol styréné, le phénol éthoxylé, les résines hydrocarbonées aromatiques contenant des groupes phénol, le diisopropylnaphtalène et le cardanol.

13. Procédé de revêtement, comprenant les étapes :
(i) mélange des composants de la composition selon l'une des revendications 1 à 12,
(ii) application de la composition mélangée sur un substrat en un temps inférieur à la durée de vie en pot,
puis durcissement de la composition mélangée.

14. Procédé de collage, comprenant les étapes
(i) mélange des composants de la composition selon l'une des revendications 1 à 12,
(ii) application de la composition mélangée, en un temps inférieur à la durée de vie en pot,
- ou bien sur au moins l'un des substrats à coller, et assemblage des substrats pour obtenir un collage en un temps inférieur au temps ouvert,
- ou dans une cavité ou un espace entre plusieurs substrats, et éventuellement insertion d'un ancrage dans la cavité ou l'espace en un temps inférieur au temps ouvert,
suivie du durcissement de la composition mélangée.

15. Article obtenu par le procédé selon l'une des revendications 13 ou 14.
